# EUROPEAN PATENT APPLICATION

(11) **EP 4 625 539 A1**
(43) Date of publication of application: **01.10.2025**
(21) Application number: 24852952.1
(22) Date of filing: 10.09.2024
(51) Int. Cl.: H01M 4/38

(54) **NEGATIVE ELECTRODE MATERIAL AND BATTERY**

(30) Priority: 07.02.2024 CN 202410176215
(71) Applicant: BTR NEW MATERIAL GROUP CO., LTD., Shenzhen, Guangdong 518106 (CN); Dingyuan New Energy Technology Co., Ltd., Huizhou, Guangdong 516227 (CN)
(72) Inventor: CHEN, Xi, Shenzhen, Guangdong 518106 (CN); PANG, Chunlei, Shenzhen, Guangdong 518106 (CN); HE, Peng, Shenzhen, Guangdong 518106 (CN); REN, Jianguo, Shenzhen, Guangdong 518106 (CN); HE, Xueqin, Shenzhen, Guangdong 518106 (CN)
(74) Representative: Noréns Patentbyrå AB
(86) International application number: PCT/CN2024/118039
(87) International publication number: WO 2025/167099

(57) **Abstract**

An anode material and a battery provided. The anode material includes a carbon matrix and a silicon material. The anode material, tested by Raman spectroscopy, has a first characteristic peak at 520±10 cm⁻¹ with a peak intensity of I_{A}; a second characteristic peak at 960±10 cm⁻¹ with a peak intensity of I_{B}; and a third characteristic peak at 480±10 cm⁻¹ with a peak intensity of Ic, where I_{A}, I_{B} and Ic have a relationship of 0.3≤I_{A}/(I_{B}+I_{C})≤0.6. The anode material provided has high initial Coulombic efficiency, high reversible capacity, and high expansion resistance.

## Description

### CROSS-REFERENCE TO RELATED APPLICATIONS

This application is a National Stage of International Application No. PCT/CN2024/118039, filed on September 10, 2024, which claims the benefit of priority to Chinese Patent Application No. 202410176215.2, entitled "Anode Material and Battery," filed on February 07, 2024.

### TECHNICAL FIELD

The present disclosure relates to the technical field of an anode material, and in particular, to an anode material and a battery.

### BACKGROUND

A lithium ion battery is widely applied in electric vehicles and consumer electronic products due to the advantages of high energy density, long cycle life, low environmental pollution, no memory effect, etc. Conventional anode carbon matrix is limited in its widespread application due to its low theoretical specific capacity (372 mAh/g). In order to improve energy density of a lithium ion battery, an anode material with high capacity has been searched. A silicon based anode material has been gradually a research hotspot due to its theoretical specific capacity which is up to 4200 mAh/g.

However, the silicon based anode material has a serious volume expansion during alloying process with lithium, and this huge volume expansion challenges structure stability of the material. In addition, as cyclical charging and discharging of the battery prepared by the anode material performs, the silicon based anode material occurs a deterioration mechanism, such as pulverization, contact loss with a conductive agent and a current collector, and formation of an unstable solid electrolyte interface (SEI), thereby degrading electrochemical performance of the anode material. A carbon matrix (also including non-carbon matrix) has excellent conductivity and mechanical property, thus, by combining with silicon, not only effectively relieves volume expansion, but also improve electrode conductivity, and obtain a stable SEI film. The silicon carbon composite material is the first commercialized silicon based anode material, which shortens transmission distance of Li⁺, and facilitates to improve dynamic performance of the material.

While, during a vapor deposition, size of a silicon based particle is determined by pore size of a carbon matrix. Ideally, silicon based primary particle is deposited in pore of the carbon matrix, without silicon based particle deposited on surface of the carbon matrix. But, in an actual state, more or less silicon based particles may be deposited on the surface of the carbon matrix. These exposed silicon based particles cause electrolyte decomposition and thickening of SEI film on the surface of the anode material, resulting in loss of irreversible active lithium ions, and further in degradation of electrochemical performance of the anode material.

### SUMMARY

The present disclosure provides an anode material and a battery, so as to relieve excessive local volume change caused by uneven stress in the anode material during cycling, as well as to enhance structure stability of the anode material, and significantly improve initial Coulombic efficiency and capacity of the anode material.

In a first aspect, some embodiments of the present disclosure provide an anode material. The anode material includes a carbon matrix and a silicon material. Alternatively, the anode material includes a non-carbon matrix and a silicon material.

The anode material, tested by Raman spectroscopy, has a first characteristic peak at 520±10 cm⁻¹ with a peak intensity of I_{A}; a second characteristic peak at 960±10 cm⁻¹ with a peak intensity of I_{B}; and a third characteristic peak at 480±10 cm⁻¹ with a peak intensity of Ic, where I_{A}, I_{B} and Ic have a relationship of 0.3≤I_{A}/(I_{B}+I_{C})≤0.6. In some implementations, the peak intensity here is characterized by a peak height.

In some embodiments, the anode material, tested by Raman spectroscopy, has a characteristic peak D at 1350±10 cm⁻¹ with a peak intensity of I_{D}; and a characteristic peak G at 1580±10 cm⁻¹ with a peak intensity of I_{G}, where 1≤I_{D}/I_{G}≤3.5. In some implementations, the peak intensity here is characterized by a peak area.

In some embodiments, the anode material and an anode material removed the silicon material are tested by an N₂ adsorption-desorption method. The anode material has a ratio A of a nitrogen volume adsorbed under 90% partial pressure and a nitrogen volume adsorbed under 10% partial pressure, where 1.3≤A≤2.5; and
the anode material removed the silicon material has a ratio B of a nitrogen volume adsorbed under 90% partial pressure and a nitrogen volume adsorbed under 10% partial pressure, where 1≤B≤1.9, and A/B>1.

In some embodiments, the anode material removed the silicon material has a total pore volume of Q₀ cm³/g, and the anode material has a total pore volume of Q₁ cm³/g, where 0.1≤Q₀-Q₁≤2.0.

In some embodiments, the anode material removed the silicon material has a total pore volume of Q₀ cm³/g, where 0.2≤Q₀≤2.0.

In some embodiments, the anode material has a total pore volume of Q₁ cm³/g, where 0.001≤Q₁≤0.1.

In some embodiments, the anode material removed the silicon material has a mass content of hydrogen element accounting for 0.01 wt% to 5 wt%.

In some embodiments, the anode material removed the silicon material has a mass content of oxygen element accounting for 0.01 wt% to 10 wt%.

In some embodiments, the anode material removed the silicon material has a mass content of nitrogen element accounting for 0.01 wt% to 0.5 wt%.

In some embodiments, the anode material removed the silicon material has a pore, and the pore with a pore size of 5 nm or less accounts for a volume proportion of ≥90% of all the pores.

In some embodiments, the anode material further includes an active particle. The active particle includes at least one of Li, Na, K, Sn, Ge, Fe, Mg, Ti, Zn, Al, P, and Cu.

In some embodiments, the silicon material includes at least one of amorphous silicon, crystalline silicon, silicon oxide, silicon alloy, and a composite of crystalline silicon and amorphous silicon.

In some embodiments, the silicon material includes amorphous silicon.

In some embodiments, the silicon material has an average particle size of 1 nm to 100 nm.

In some embodiments, the anode material has a total pore volume of 0.001 cm³/g to 0.1 cm³/g.

In some embodiments, the anode material has a mass proportion of oxygen element accounting for ≤5 wt%.

In some embodiments, the anode material has a mass proportion of carbon element accounting for 40 wt% to 60 wt%.

In some embodiments, the anode material has a mass proportion of silicon element accounting for 40 wt% to 60 wt%.

In some embodiments, the anode material has a specific surface area of 0.5 m²/g to 10 m²/g.

In some embodiments, the anode material has a compaction density of 0.8 g/cm³ to 1.3 g/cm³.

In some embodiments, the anode material has a tap density of 0.5 g/cm³ to 1.5 g/cm³.

In some embodiments, an anode slurry prepared by the anode material has a gas production of ≤0.5 mL/g after 24 h at 25°C. The anode slurry prepared by the anode material has a gas production of ≤2 mL/g after 24 h at 45°C.

In a second aspect, some embodiments of the present disclosure provide a battery. The battery includes the anode material according to the first aspect.

Compared with the prior art, the present disclosure has the following benefits:

In the anode material provided by the present disclosure, the first characteristic peak is used for characterizing a resonance vibration peak between Si-Si atoms (i.e. unoxidized Si), and peak intensity (such as height) and shape of which reflect crystal structure and impurity content of the active material. When the first characteristic peak shifts, it reflects stress distribution on surface of Si monocrystal. The second characteristic peak is used for characterizing a Si-O-Si vibration peak, showing structure and quality of silicon oxide. The third characteristic peak is used for characterizing a vibration peak of Si-O, showing thickness and quality of oxide layer on surface of silicon particle. By controlling 0.3≤I_{A}/(I_{B}+I_{C})≤0.6, it is ensured that oxidation degree of surface of silicon particle in the anode material is controlled within a reasonable range. A proper amount of oxide on surface of the silicon particle reduces side reactions caused by contact between silicon and an electrolyte, and also avoids excessive oxide from affecting specific capacity and initial Coulombic efficiency of the anode material. In addition, a proper amount of oxide on surface of the silicon material plays a role of passivation, which, during subsequent slurry preparation for plate, reduces a side reaction between exposed Si and aqueous solution, and reduces problem of gas generation. The anode material provided by the present disclosure has excellent electrochemical performance, improves cycle stability of the anode material, and reduce gas generation.

### DESCRIPTION OF EMBODIMENTS

For better understanding the technical solutions of the present disclosure, embodiments of the present disclosure are described in details below.

It should be clear that the described embodiments are only some rather than all of the embodiments of the present disclosure. Based on the embodiments the present disclosure, all other embodiments obtained by those skilled in the art without any creative efforts fall within the protection scope of the present disclosure.

The terms used in the embodiments of the present disclosure are only for the purpose of describing specific embodiments, and are not intended to limit the present disclosure. The singular forms of "a", "the" and "this" used in the embodiments of the present disclosure and the appended claims are also intended to include the plurality form, unless the context clearly indicates other meanings.

It should be understood that the term "and / or" used herein is merely an association relationship describing an associated object, and indicates that there may be three relationships. For example, A and/or B may indicate three situations: only A, both A and B, and only B. In addition, the character "/" herein generally indicates an "or" relationship between the associated objects.

Some embodiments of the present disclosure provide an anode material. The anode material includes a carbon matrix and a silicon material. Alternatively, the anode material includes a non-carbon matrix and a silicon material.

The anode material, tested by Raman spectroscopy, has a first characteristic peak at 520±10 cm⁻¹ with a peak intensity of I_{A}; a second characteristic peak at 960±10 cm⁻¹ with a peak intensity of I_{B}; and a third characteristic peak at 480±10 cm⁻¹ with a peak intensity of Ic, where I_{A}, I_{B} and Ic have a relationship of 0.3≤I_{A}/(I_{B}+I_{C})≤0.6. The peak intensity may be characterized in several ways. In some embodiments, the above peak intensity is characterized by a peak height.

In the foregoing solution, the first characteristic peak is used for characterizing a resonance vibration peak between Si-Si atoms (i.e. unoxidized Si), and peak intensity (such as height) and shape of which reflect crystal structure and impurity content of the active material. When the first characteristic peak shifts, it reflects stress distribution on surface of Si monocrystal. For example, if there is stress in an object, a certain band sensitive to the stress will shift and deform. Within an elastic range, a change in the Raman peak frequency shift is proportional to the subjected stress. Under a compressive stress, the band shifts towards higher frequency, while under tensile stress, the band shifts towards lower frequency. The second characteristic peak is used for characterizing a Si-O-Si vibration peak, showing structure and quality of silicon oxide. The third characteristic peak is used for characterizing a vibration peak of Si-O, showing thickness and quality of oxide layer on surface of silicon particle. By controlling 0.3≤I_{A}/(I_{B}+I_{C})≤0.6, it is ensured that oxidation degree of surface of silicon particle in the anode material is controlled within a reasonable range. A proper amount of oxide on surface of the silicon particle reduces a side reaction caused by direct contact between silicon and an electrolyte, and also reduces influence on specific capacity and initial Coulombic efficiency of the anode material due to excessive oxide. In addition, a proper amount of oxide on surface of the silicon material plays a role of passivation, which, during subsequent slurry preparation for plate, reduces a side reaction between exposed Si and aqueous solution, and reduces problem of gas generation of the anode material. The anode material provided by the present disclosure has excellent electrochemical performance, improves cycle stability of the battery prepared by the anode material, and reduce problem of gas generation of the anode material.

In some embodiments, the carbon matrix includes an amorphous carbon material and a graphitized carbon material.

In some embodiments, the non-carbon matrix includes at least one of metal oxide, silicide, silicate, phosphate, titanate, and aluminum borate. It is understood that the non-carbon matrix adopts the above material, so as to play a role of supporting skeleton. Compared with the existing conductive carbon matrix, the non-carbon matrix adopted by the present disclosure has better strength and rigidity, thereby allowing the anode material to have a higher compaction density during battery preparation, improving structure stability of the anode material, reducing breakage and pulverization of particles of the anode material, and facilitating to improve cycle performance of the anode material. Meanwhile, the non-carbon matrix generally has good ionic conductivity due to electronic insulation, which plays a role as an artificial SEI film, thereby delaying formation of subsequent natural SEI film, reducing direct contact between the anode material and an electrolyte, and minimizing occurrence of a side reaction. In addition, the non-carbon matrix has lower cost advantage compared with the carbon matrix, since the existing carbon matrix involves higher energy consumption and environmental cost due to complexity of activating and pore-forming process. If a natural porous material, such as porous ceramics and the like, is adopted, a complex pore-forming process will be omitted, thereby reducing the cost to 10% or even less than that of a porous carbon.

In some embodiments, the metal oxide includes at least one of aluminum oxide, zirconium oxide, germanium dioxide, and manganese dioxide.

In some embodiments, the silicide includes at least one of silicon carbide and silicon nitride.

In some embodiments, the silicate includes at least one of cordierite, mullite, and zeolite. It is understood that the silicate of the present disclosure is mainly a natural silicate mineral. Cordierite (magnesium aluminum silicate), with a chemical formula of Mg₂Al₄Si₅O₁₈, contains elements such as Na, K, Ca, Fe, Mn, etc., and H₂O. Mullite has a chemical formula of 3Al₂O₃-2SiO₂. Zeolite (aluminosilicate) has a chemical formula of AmBₚO₂ₚ.nH₂O, where A represents a cation, usually including a monovalent or divalent metal ion, such as Ca, Na, K, Ba, Sr, etc., B represents a basic unit constituting a zeolite framework structure, i.e., Si atom and Al atom, p is a cationic valence, m is quantity of the cationic A, and n is quantity of water molecule.

In some embodiments, the phosphate includes at least one of aluminum phosphate, magnesium phosphate, calcium phosphate, titanium phosphate, chromium phosphate, cobalt phosphate, nickel phosphate, germanium phosphate, zirconium phosphate, niobium phosphate, molybdenum phosphate, tantalum phosphate, tungsten phosphate, and lanthanum phosphate.

In some embodiments, the titanate includes at least one of calcium titanate, iron titanate, lithium titanate, and barium titanate.

In some embodiments, the anode material, tested by Raman spectroscopy, has a characteristic peak D at 1350±10 cm⁻¹ with a peak intensity of I_{D}; and a characteristic peak G at 1580±10 cm⁻¹ with a peak intensity of I_{G}, where 1≤I_{D}/I_{G}≤3.5. In some embodiments, the peak intensity here is characterized by a peak area. A value of I_{D}/I_{G} may specifically be 1.0, 1.2, 1.4, 1.5, 1.6, 1.7, 1.8, 1.9, 2.0, 2.2, 2.4, 2.5, 2.6, 2.8, 3.0, 3.2, or 3.5, etc., or other value within the above range, which is not limited herein. Controlling the ratio of I_{D}/I_{G} within the above range facilitates to reach a balance between graphitized carbon material and amorphous carbon material, allowing the anode material to possess both ductility of the graphitized material and toughness of the amorphous carbon material. The amorphous carbon material is also utilized to improve electronic conductivity of the anode material and enhance lithium ion transport efficiency. It is understood that in the Raman spectrum, D band (at 1350±10 cm⁻¹) of the carbon material reflects a disordered structure of the carbon material (amorphous carbon material), and G band (at 1580±10 cm⁻¹) is related to vibration of carbon atoms bonding by sp² in two-dimensional hexagonal lattice, and reflects an ordered structure of the carbon material (i.e. graphitized carbon material). The ratio of I_{D}/I_{G} can reflects a defect degree of carbon coating layer.

In some embodiments of the present disclosure, immersing the anode material into a concentrated nitric acid with a mass fraction of 68% for 1 h, then adding drop wise an HF acid solution with a mass fraction of 20% in to the anode material to generate yellow smoke, and repeating adding until no more yellow smoke generated in the solution, adopting a concentrated nitric acid with a mass fraction of 68% for digesting residue, and washing and drying, to obtain the anode material removed the silicon material. Alternatively, in some other embodiments, taking the active material being silicon material as an example, under stirring, adding drop wise 150 mL of HF acid solution with a mass fraction of 20% into 10 g of the anode material to generate SiF₄ and H₂ gas and release heat, after no gas generated, removing supernatant acid by centrifugation, and adding 150 mL of HF acid solution with a mass fraction of 20% again, stirring for 12 h, removing supernatant acid by centrifugation again, and washing with pure water until neutral and drying, to obtain the anode material removed the silicon material, i.e., the substrate.

In some embodiments, the anode material and an anode material removed the silicon material are tested by an N₂ adsorption-desorption method. The anode material has a ratio A of a nitrogen volume adsorbed under 90% partial pressure and a nitrogen volume adsorbed under 10% partial pressure, where 1.3≤A≤2.5; and
the anode material removed the silicon material has a ratio B of a nitrogen volume adsorbed under 90% partial pressure and a volume nitrogen adsorbed under 10% partial pressure, where 1≤B≤1.9, and A/B>1.

It is understood that the anode material removed the silicon material has a physicochemical state closed to that of the carbon matrix not filled with the silicon material, which has a high porosity. The anode material removed the silicon material has a ratio B of a nitrogen volume P₉₀ adsorbed under 90% partial pressure and a nitrogen volume P₁₀ adsorbed under 10% partial pressure, where B is between 1 and 1.9. The anode material which has been filled with the silicon material has a ratio A of a nitrogen volume P₉₀ adsorbed under 90% partial pressure and a nitrogen volume P₁₀ adsorbed under 10% partial pressure, where A is between 1.3 and 2.5. Since a large number of pores, especially micropores, of the carbon matrix are filled with the silicon material, pore volume of the anode material is significantly reduced, mainly composed of the mesopore and the macropore, thus A is greater than B.

In some embodiments, the anode material removed the silicon material has a total pore volume of Q₀ cm³/g, and the anode material has a total pore volume of Q₁ cm³/g, where 0.1≤Q₀-Q₁≤2.0. A value of Q₀-Q₁ may specifically be 0.1 cm³/g, 0.5 cm³/g, 0.6 cm³/g, 0.8 cm³/g, 1.0 cm³/g, 1.3 cm³/g, 1.5 cm³/g, 1.8 cm³/g, or 2.0 cm³/g, etc., or other value within the above range, which is not limited herein. It is understood that, compared with the anode material removed the silicon material, the anode material containing the silicon material has significantly reduced pore volume, indicating increased compactness of the anode material, and that the silicon material is effectively filled into the carbon matrix, thereby effectively improving specific capacity of the anode material. When the value of Q₀-Q₁ is too small, it indicates that the anode material has relatively less content of the silicon material filled therein, and thus has more remaining pores, thereby increasing specific surface area of the anode material, and increasing a side reaction of the anode material. When the value of Q₀-Q₁ is too large, it indicates that the anode material has relatively large content of the silicon material filled therein, and thus has insufficient pores reserved for relieving volume expansion of the silicon material, which tends to cause excessive expansion stress of local silicon material in the anode material, resulting in decreased cycling stability of the battery prepared by the anode material, and an exacerbation of capacity degradation. In some embodiments, 0.7≤Q₀-Q₁≤1.5.

In some embodiments, the anode material removed the silicon material has a total pore volume of Q₀ cm³/g, where 0.2≤Q₀≤2.0, which may specifically be 0.2 cm³/g, 0.5 cm³/g, 0.6 cm³/g, 0.8 cm³/g, 1.0 cm³/g, 1.3 cm³/g, 1.5 cm³/g, 1.8 cm³/g, or 2.0 cm³/g, etc., or other value within the above range, which is not limited herein.

In some embodiments, the anode material has a total pore volume of Q₁ cm³/g, where 0.001≤Q₁≤0.1, which may specifically be 0.001 cm³/g, 0.002 cm³/g, 0.005 cm³/g, 0.008 cm³/g, 0.01 cm³/g, 0.02 cm³/g, 0.03 cm³/g, 0.04 cm³/g, 0.05 cm³/g, 0.06 cm³/g, 0.07 cm³/g, 0.08 cm³/g, 0.09 cm³/g or 0.1 cm³/g, etc., or other value within the above range, which is not limited herein.

In some embodiments, the anode material has a pore, and the pore includes a micropore and a mesopore, where the micropore has a pore volume proportion accounting for 2% to 50%, and the mesopore has a pore volume proportion accounting for 50% to 98%.

For example, the micropore has a pore volume proportion accounting for 2% to 50% of the total pore volume of the anode material, which may specifically be 2%, 5%, 10%, 15%, 20%, 25%, 30%, 35%, 40%, 45% or 50%, etc., which is not limited herein. In some embodiments, the micropore has a pore volume proportion accounting for 2% to 15% of the total pore volume of the anode material.

The mesopore has a pore volume proportion accounting for 50% to 98% of the total pore volume of the anode material, which may specifically be 50%, 60%, 70%, 75%, 80%, 85%, 90%, 92%, 95% or 98%, etc., which is not limited herein. In some embodiments, the mesopore has a pore volume proportion accounting for 85% to 98% of the total pore volume of the anode material.

It should be noted that the pore in the anode material is mainly the mesopore, which is located inside the carbon matrix or is a closed pore. These mesopore, on the one hand, provides buffer space for expansion of the active material during charging and discharging, and on the other hand, ensures stress dispersion distribution. As applying the anode material to a lithium ion battery, specific capacity of the anode material is improved, volume expansion of the active material is relieved, particle strength of the anode material is improved, and collapse and crushing of material structure of the plate prepared by the anode material are reduced during rolling or cycling , thereby improving cycle performance, electrochemical performance, etc. of the battery prepared by the anode material based on synergistic effect of the above overall structure.

In some embodiments, the silicon material includes at least one of amorphous silicon, crystalline silicon, silicon oxide, silicon alloy, and a composite of crystalline silicon and amorphous silicon. In some embodiments, the silicon alloy is silicon lithium alloy, silicon magnesium alloy, etc. Definitely, it is noted that, in some embodiments, the silicon alloy includes an elemental silicon particle and an alloy.

In some embodiments, the silicon material includes amorphous silicon. It is understood that the amorphous silicon expands isotropically during lithiation, which reduces collapse of pore structure of the anode material, inhibits rapid degradation of specific capacity of the battery prepared by the anode material, and improves cycle performance of the battery prepared by the anode material during lithiation.

In some embodiments, the silicon material has an average particle size of 1 nm to 100 nm, which may specifically be 1 nm, 10 nm, 20 nm, 50 nm, 70 nm, 100 nm or any value between 1 nm to 100 nm. In some embodiments, the silicon material has an average particle size of 1 nm to 5 nm.

In some embodiments, the anode material further includes an active particle. The active particle includes at least one of Li, Na, K, Sn, Ge, Fe, Mg, Ti, Zn, Al, P, and Cu. The active particle may be an elemental metal.

In some embodiments, the active particle may specifically be a Sn particle, a Ge particle, or an Al particle. In some other embodiments, the active particle may also be silicon magnesium alloy, silicon magnesium alloy, etc. Definitely, it is noted that, in some embodiments, the active particle includes an elemental particle and an alloy.

For example, at least part of the active particle is filled in the pore of the carbon matrix. It is understood that filling both the silicon material and the active particle in the pore of the carbon matrix ensures dispersion distribution of the silicon material, the active particle and the carbon, which, on the one hand, increases specific capacity of the anode material, and on the other hand, due to reduced pores of the carbon matrix filled with the silicon material and the active particle, increases density of the anode material, effectively reduces occurrence of a side reaction, and further improves cycle performance of the anode material.

In some embodiments, the anode material removed the silicon material has a mass content of hydrogen element accounting for 0.01 wt% to 5 wt%, which may specifically be 0.01 wt%, 0.02 wt%, 0.05 wt%, 0.08 wt%, 0.1 wt%, 0.2 wt%, 0.3 wt%, 0.5 wt%, 1 wt%, 1.5 wt%, 2 wt%, 2.5 wt%, 3 wt%, 3.5 wt%, 4 wt%, 4.5 wt% or 5 wt%, etc., which is not limited herein.

In some embodiments, the anode material removed the silicon material has a mass content of oxygen element accounting for 0.01 wt% to 10 wt%, which may specifically be 0.01 wt%, 0.05 wt%, 0.08 wt%, 0.1 wt%, 0.5 wt%, 1 wt%, 1.5 wt%, 2 wt%, 2.5 wt%, 3 wt%, 3.5 wt%, 4 wt%, 4.5 wt% or 5 wt%, etc., which is not limited herein.

In some embodiments, the anode material removed the silicon material has a mass content of nitrogen element accounting for 0.01 wt% to 0.5 wt%, which may specifically be 0.01 wt%, 0.02 wt%, 0.05 wt%, 0.08 wt%, 0.1 wt%, 0.2 wt%, 0.3 wt% or 0.5 wt%, etc., which is not limited herein.

In some embodiments, the anode material removed the silicon material has a pore, and a pore with a pore size of 5 nm or less accounts for a volume proportion of ≥90% of all the pores. For example, the pore with a pore size of 5 nm or less accounts for a volume proportion of 90%, 92%, 93%, 94%, 95%, 96%, 97%, 98% or 99%, etc., of all the pores, which is not limited herein. It is understood that the pore of the carbon matrix is mainly a pore with a pore size of 5 nm or less. The pore size distribution within this range facilitates to adjust size of silicon material formed during deposition, improves dispersion uniformity of the carbon matrix and the silicon material, and reduces segregation phenomenon of the silicon material in the anode material.

In some embodiments, the anode material has a mass proportion of oxygen element accounting for ≤5 wt%. For example, the anode material may have a mass proportion of oxygen element accounting for 0 wt%, 1 wt%, 1.5 wt%, 2 wt%, 2.5 wt%, 3 wt%, 3.5 wt%, 4 wt%, 4.5 wt%, 5 wt%, which is not limited herein. It is understood that, when a mass content of the oxygen element is too high, silicon based material in the anode material may be partially oxidized. Controlling the mass content of oxygen element in the anode material within the above range facilitates to improve specific capacity of the anode material and reduce formation of silicon dioxide with lower activity.

In some embodiments, the anode material has a mass proportion of carbon element accounting for 40 wt% to 60 wt%. For example, the anode material may have a mass proportion of carbon element accounting for 40 wt%, 45 wt%, 50 wt%, 52 wt%, 53 wt%, 55 wt%, 56.5 wt%, 58 wt%, or 60 wt%, which is not limited herein.

In some embodiments, the anode material has a mass proportion of silicon element accounting for 40 wt% to 60 wt%. For example, the anode material may have a mass proportion of silicon element accounting for40 wt%, 41 wt%, 45 wt%, 47 wt%, 50 wt%, 52 wt%, 53 wt%, 55 wt%, 56.5 wt%, 58 wt% or 60 wt%, which is not limited herein.

In some embodiments, the anode material has a specific surface area of 0.5 m²/g to 10 m²/g. For example, the anode material may have a specific surface area of 0.5 m²/g, 1 m²/g, 2 m²/g, 4 m²/g, 5 m²/g, 10 m²/g, etc., or other value within the above range, which is not limited herein.

In some embodiments, the anode material has a compaction density of 0.8 g/cm³ to 1.3 g/cm³, which may specifically be 0.8 g/cm³, 0.9 g/cm³, 1.0 g/cm³, 1.1 g/cm³, 1.2 g/cm³ or 1.3 g/cm³, etc., or other value within the above range, which is not limited herein.

In some embodiments, the anode material has a tap density of 0.5 g/cm³ to 1.5 g/cm³, which may specifically be 0.5 g/cm³, 0.6 g/cm³, 0.7 g/cm³, 0.8 g/cm³, 0.9 g/cm³, 1.0 g/cm³, 1.1 g/cm³, 1.2 g/cm³, 1.3 g/cm³, 1.4 g/cm³ or 1.5 g/cm³, etc., and other value within the above range, which is not limited herein.

In some embodiments, an anode slurry prepared by the anode material has a gas production of ≤0.5 mL/g after 24 h at 25°C. The anode slurry prepared by the anode material has a gas production of ≤2 mL/g after 24 h at 45°C.

It is understood that the more the exposed silicon material in the anode material, the lower the electrical conductivity of the anode material, and the more serious the gas generation. This is because silicon hydrolyzes in aqueous solution to form silicate and hydrogen. The gas production of the anode slurry is controlled within the above range, indicating few exposed silicon material in the anode material, thereby effectively controlling the gas generation of the anode material.

In a second aspect, some embodiments of the present disclosure further provide a preparation method of an anode material, which adopts a chemical vapor deposition process. The chemical vapor deposition (CVD) includes: placing a carbon matrix in one or more precursor gases, and generating desired deposit by reaction and/or decomposition of the precursor gas the on the carbon matrix under a set temperature and pressure condition, to obtain an anode material with high performance.

S10, performing a primary sintering on a pretreated coconut shell at 600°C to 900°C for 0.5 h to 2 h in an inert atmosphere, to obtain a carbonized material.

In some embodiments, the primary sintering has a temperature of 600°C to 900°C, which may specifically be 600°C, 650°C, 700°C, 750°C, 800°C, 850°C, or 900°C, etc., or other value within the above range, which is not limited herein.

In some embodiments, the primary sintering has a duration of 0.5 h to 2 h, which may specifically be 0.5 h, 1 h, 1.5 h, or 2 h, etc., or other value within the above range, which is not limited herein.

S20, mixing the carbonized material with an activator and activating, and immersing activated product in an acid solution to obtain the carbon matrix.

In some embodiments, the activator includes at least one of potassium hydroxide and sodium hydroxide.

In some embodiments, a mass ratio of the carbonized material and the activator is 1:(1 to 10), which may specifically be 1:1, 1:2, 1:3, 1:4, 1:5, 1:7, 1:8, 1:9 or 1:10, etc., or other value within the above range, which is not limited herein.

In some embodiments, the activating has a temperature of 800°C to 900°C, which may specifically be 800°C, 820°C, 840°C, 850°C, 860°C, 870°C, 880°C, 890°C, or 900°C, etc., or other value within the above range, which is not limited herein.

In some embodiments, the activating has a duration of 2 h to 6 h, which may specifically be 2 h, 3 h, 3.5 h, 4 h, 5 h or 6 h, etc., or may be other values within the above range, which is not limited herein.

In some embodiments, immersing activated product in an acid solution for acid leaching, and solid-liquid separating, to obtain the carbon matrix. The acid used for acid leaching is hydrochloric acid, nitric acid, etc. A sufficient acid leaching removes other impurities. It should be noted that after the acid leaching, it needs for continually ultrasonically washing acid leached product with ethanol or deionized water until washed liquid is neutral.

In some embodiments, the solid-liquid separating includes filtrating and drying. The drying has a duration of 1 h to 10 h, and a temperature of 70°C to 150°C.

In the present disclosure, by controlling process parameters such as temperature, duration, etc., of the activating, the activator is effectively utilized for activating the carbonized material and forming pores, allowing the carbon matrix to be rich in pores.

In some embodiments, the carbon matrix has a total pore volume of 0.2 cm³/g to 2 cm³/g, which may specifically be 0.2 cm³/g, 0.3 cm³/g, 0.4 cm³/g, 0.5 cm³/g, 0.6 cm³/g, 0.9 cm³/g, 1.0 cm³/g, 1.2 cm³/g, 1.5 cm³/g, 1.8 cm³/g, 1.9 cm³/g, 1.95 cm³/g, or 2 cm³/g, etc., or other value within the above range, which is not limited herein. A sufficient pore volume in the carbon matrix provides sufficient storage space for the silicon material, and also relieves volume expansion of the silicon material occurred during de-lithiation and lithiation, thereby facilitating to improve cycle performance of the anode material.

In some embodiments, the carbon matrix has a mass content of hydrogen element accounting for 0.01 wt% to 5 wt%, which may specifically be 0.01 wt%, 0.02 wt%, 0.05 wt%, 0.08 wt%, 0.1 wt%, 0.2 wt%, 0.3 wt%, 0.5 wt%, 1 wt%, 1.5 wt%, 2 wt%, 2.5 wt%, 3 wt%, 3.5 wt%, 4 wt%, 4.5 wt% or 5 wt%, etc., which is not limited herein.

In some embodiments, the carbon matrix has a mass content of oxygen element accounting for 0.01 wt% to 10 wt%, which may specifically be 0.01 wt%, 0.05 wt%, 0.08 wt%, 0.1 wt%, 0.5 wt%, 1 wt%, 1.5 wt%, 2 wt%, 2.5 wt%, 3 wt%, 3.5 wt%, 4 wt%, 4.5 wt% or 5 wt%, etc., which is not limited herein.

In some embodiments, the carbon matrix has a mass content of nitrogen element accounting for 0.01 wt% to 0.5 wt%, which may specifically be 0.01 wt%, 0.02 wt%, 0.05 wt%, 0.08 wt%, 0.1 wt%, 0.2 wt%, 0.3 wt% or 0.5%, etc., which is not limited herein.

In some embodiments, the carbon matrix has a ratio A' of a nitrogen volume adsorbed under 90% partial pressure and a nitrogen volume adsorbed under 10% partial pressure, where 1≤A'≤1.9. It is understood that the carbon matrix has a relatively high porosity and a relatively small pore size, which facilitates deposition of the silicon material.

In some embodiments, in the carbon matrix, a pore with a pore size of 5 nm or less accounts for a volume proportion of ≥90% of all the pores, which may specifically be 90%, 91%, 92%, 93%, 95%, 96%, 98% or 99%, etc., which is not limited herein.

It is understood that the pores of the carbon matrix is mainly a pore with a pore size of 5 nm or less. The pore size distribution within this range facilitates to adjust size of silicon material formed during deposition, improve dispersion uniformity of the carbon matrix and the silicon material, and reduce segregation phenomenon of the silicon material.

In some embodiments, the carbon matrix has a pore, and the pore includes a micropore. The micropore accounts for a volume proportion of ≥80% of all the pores. A pore with a pore size of 2 nm to 5 nm accounts for a volume proportion of 0% to 10% of all the pores. For example, the micropore may account for a volume proportion of 80%, 81%, 82%, 83%, 84%, 85%, 87%, 88%, 90%, 92%, 93%, 95%, 98%, or 99%, etc., of all the pores, which is not limited herein. For example, the pore with a pore size of 2 nm to 5 nm may account for a volume proportion of 0%, 2%, 3%, 4%, 5%, 6%, 7%, 8%, 9% or 10%, etc., of all the pores, which is not limited herein.

It is understood that the pores of the carbon matrix is mainly a micropore. The pore size distribution within this range facilitates to form a gas phase mass transfer channel inside the carbon matrix during deposition, improve diffusion environment inside the carbon matrix, and reduce density gradient of the carbon matrix, thereby improving compactness of the anode material.

S30, introducing reaction gas containing silicon source gas, and performing vapor deposition on the carbon matrix, to obtain the anode material.

In some embodiments, the vapor deposition has a deposition temperature of 400°C to 650°C. For example, the deposition temperature may be 400°C, 420°C, 450°C, 470°C, 490°C, 500°C, 530°C, 550°C, 580°C, 600°C, 610°C, 620°C, 630°C, 640°C, or 650°C, etc., or other value between 400°C and 650°C, which is not limited herein.

In some embodiments, the vapor deposition has a deposition duration of 5 h to 50 h. For example, the deposition duration may be 5 h, 8 h, 10 h, 15 h, 20 h, 25 h, 30 h, 35 h, 40 h, or 50 h, etc., or other value within the above range, which is not limited herein.

It is understood that the process conditions of the vapor deposition, such as deposition temperature and deposition duration, affects the deposition of the silicon material in the pore of the carbon matrix. Controlling the temperature and duration of the vapor deposition within the above ranges ensures that the reaction gas is not decomposed and deposited before entering the pore of the carbon matrix, but rapidly decomposes and deposits after entering the pore.

In some embodiments, the vapor deposition is performed under a protective atmosphere.

In some embodiments, the protective atmosphere includes at least one of nitrogen, argon, helium, neon, krypton, and xenon.

In some embodiments, the reaction gas includes a raw material of the silicon source gas. The raw material of the silicon source gas includes at least one of silane, disilane, chlorosilane, dichlorosilane, trichlorosilane, and tetrachlorosilane. It should be noted that when the raw material of the silicon source gas is silane, disilane, chlorosilane or dichlorosilane, it is gaseous at room temperature; while when the raw material of the silicon source gas is trichlorosilane or tetrachlorosilane, it is liquid at room temperature. During the vapor deposition, liquid silicon source will be vaporized into a vaporous silicon source.

In some embodiments, the silicon source gas has a flow rate of 5 L/min to 20 L/min, which may specifically be 5 L/min, 6 L/min, 8 L/min, 10 L/min, 12 L/min, 15 L/min, 18 L/min or 20 L/min, etc., which is not limited herein.

Some embodiments of the present disclosure further provide a battery. The battery includes the above anode material. The battery is an electrochemical device, such as a lithium ion battery or a sodium ion battery, which is not limited herein.

The above description is only a preferred embodiment of the present disclosure and is not intended to limit the present disclosure, and any modifications, equivalent substitutions, improvements and the like made within the spirit and principle of the present disclosure should be included within the scope of the present disclosure.

### Example 1

(1) a pretreated coconut shell was placed in a tube furnace and calcined at 750°C for 0.5 h in an inert atmosphere to obtain a carbonized material;
(2) the carbonized material and KOH powder in a mass ratio of 1:5 were mixed, activated in a nitrogen atmosphere, with an activation temperature of 900°C and an activation duration of 6 h, then cooled to room temperature, and grinded for 0.5 h; put into deionized water and added with dilute hydrochloric acid (with a mass fraction of 10 wt%), ultrasonically dispersed until uniform, stirred, washed with water until neutral, filtered, vacuum dried at 110°C for 6 h, and fully grinded, to obtain a carbon matrix; and
(3) the carbon matrix was placed into a chemical vapor deposition furnace for CVD, using silane as a working gas, with a deposition temperature of 500°C, a deposition duration of 20 h, and a flow rate of the silane of 10 L/min, to obtain the anode material.

The anode material prepared by this example includes carbon matrix and silicon material. The carbon matrix has a pore, and at least part of the silicon material is filled in the pore.

In this example, parameters of the anode material removed the silicon material are shown in Table 1, and the remaining parameters of the anode material are shown in Table 2.

### Example 2

(1) a pretreated coconut shell was placed in a tube furnace and calcined at 600°C for 2 h in an inert atmosphere to obtain a carbonized material;
(2) the carbonized material and KOH powder in a mass ratio of 1:5 were activated in a nitrogen atmosphere, with an activation temperature of 900°C and an activation duration of 4 h, then cooled to room temperature, and grinded for 0.5 h; put into deionized water and added with dilute hydrochloric acid (with a mass fraction of 10 wt%), ultrasonically dispersed until uniform, stirred, washed with water until neutral, filtered, vacuum dried at 110°C for 6 h, and fully grinded, to obtain a carbon matrix; and
(3) the carbon matrix was placed into a chemical vapor deposition furnace for CVD, using silane as a working gas, with a deposition temperature of 400°C, a deposition duration of 40 h, and a flow rate of the silane of 5 L/min, to obtain the anode material.

The anode material prepared by this example includes carbon matrix and silicon material. The carbon matrix has a pore, and at least part of the silicon material is filled in the pore.

In this example, parameters of the anode material removed the silicon material are shown in Table 1, and the remaining parameters of the anode material are shown in Table 2.

### Example 3

(1) a pretreated coconut shell was placed in a tube furnace and calcined at 900°C for 1 h in an inert atmosphere to obtain a carbonized material;
(2) the carbonized material and KOH powder in a mass ratio of 1:4 were mixed, activated in a nitrogen atmosphere, with an activation temperature of 900°C and an activation duration of 2 h, then cooled to room temperature, and grinded for 0.5 h; put into deionized water and added with dilute hydrochloric acid (with a mass fraction of 10 wt%), ultrasonically dispersed until uniform, stirred, washed with water until neutral, filtered, vacuum dried at 110°C for 6 h, and fully grinded, to obtain a carbon matrix; and
(3) the carbon matrix was placed into a chemical vapor deposition furnace for CVD, using silane as a working gas, with a deposition temperature of 550°C, a deposition duration of 10 h, and a flow rate of the silane of 5 L/min, to obtain the anode material.

The anode material prepared by this example includes carbon matrix and silicon material. The carbon matrix has a pore, and at least part of the silicon material is filled in the pore.

In this example, parameters of the anode material removed the silicon material are shown in Table 1, and the remaining parameters of the anode material are shown in Table 2.

### Example 4

(1) a pretreated coconut shell was placed in a tube furnace and calcined at 750°C for 1.5 h in an inert atmosphere to obtain a carbonized material;
(2) the carbonized material and KOH powder in a mass ratio of 1:10 were mixed, activated in a nitrogen atmosphere, with an activation temperature of 900°C and an activation duration of 4 h, then cooled to room temperature, and grinded for 0.5 h; put into deionized water and added with dilute hydrochloric acid (with a mass fraction of 10 wt%), ultrasonically dispersed until uniform, stirred, washed with water until neutral, filtered, vacuum dried at 110°C for 6 h, and fully grinded, to obtain a carbon matrix; and
(3) the carbon matrix was placed into a chemical vapor deposition furnace for CVD, using silane as a working gas, with a deposition temperature of 400°C, a deposition duration of 12 h, and a flow rate of the silane of 6 L/min, to obtain the anode material.

The anode material prepared by this example includes carbon matrix and silicon material. The carbon matrix has a pore, and at least part of the silicon material is filled in the pore.

In this example, parameters of the anode material removed the silicon material are shown in Table 1, and the remaining parameters of the anode material are shown in Table 2.

### Example 5

This example was conducted in the same way as Example 1 excepting that:
(2) the carbonized material and KOH powder in a mass ratio of 1:8 were mixed, activated in a nitrogen atmosphere, with an activation temperature of 900°C and an activation duration of 20 h, then cooled to room temperature, and grinded for 0.5 h; put into deionized water and added with dilute hydrochloric acid (with a mass fraction of 10 wt%), ultrasonically dispersed until uniform, stirred, washed with water until neutral, filtered, vacuum dried at 110°C for 6 h, and fully grinded, to obtain a carbon matrix.

### Example 5'

This example was conducted in the same way as Example 1 excepting that:
(2) the carbonized material and KOH powder in a mass ratio of 1:8 were mixed, activated in a nitrogen atmosphere, with an activation temperature of 900°C and an activation duration of 6 h, then cooled to room temperature, and grinded for 0.5 h; put into deionized water and added with dilute hydrochloric acid (with a mass fraction of 10 wt%), ultrasonically dispersed until uniform, stirred, washed with water until neutral, filtered, vacuum dried at 110°C for 6 h, and fully grinded, to obtain a carbon matrix.

### Example 6

This example was conducted in the same way as Example 1 excepting that:
(3) the carbon matrix was placed into a chemical vapor deposition furnace for CVD, using silane as a working gas, with a deposition temperature of 600°C, a deposition duration of 18 h, and a flow rate of the silane of 15 L/min, to obtain the anode material.

### Example 7

This example was conducted in the same way as Example 1 excepting that:
(3) the carbon matrix was placed into a chemical vapor deposition furnace for CVD, using silane as a working gas, with a deposition temperature of 550°C, a deposition duration of 15 h, and a flow rate of the silane of 5 L/min, to obtain the anode material.

### Example 8

This example was conducted in the same way as Example 1 excepting that: a non-carbon matrix SiC was employed.

### Comparative Example 1

This comparative example was conducted in the same way as Example 1 excepting that:
(3) the carbon matrix was placed into a chemical vapor deposition furnace for CVD, using silane as a working gas, with a deposition temperature of 500°C, a deposition duration of 55 h, and a flow rate of the silane of 10 L/min, to obtain the anode material.

### Comparative Example 2

This comparative example was conducted in the same way as Example 1 excepting that:
(3) the carbon matrix was placed into a chemical vapor deposition furnace for CVD, using silane as a working gas, with a deposition temperature of 500°C, a deposition duration of 20 h, and a flow rate of the silane of 22 L/min, to obtain the anode material.

### Comparative Example 3

This comparative example was conducted in the same way as Example 1 excepting that:
(3) the carbon matrix was placed into a chemical vapor deposition furnace for CVD, using silane as a working gas, with a deposition temperature of 500°C, a deposition duration of 5 h, and a flow rate of the silane of 10 L/min, to obtain the anode material.

### Comparative Example 4

This comparative example was conducted in the same way as Example 1 excepting that:
(3) the carbon matrix was placed into a chemical vapor deposition furnace for CVD, using silane as a working gas, with a deposition temperature of 500°C, a deposition duration of 20 h, and a flow rate of the silane of 2 L/min, to obtain the anode material.

### Performance Test

### (1) Etching Treatment

The anode material was immersed into a concentrated nitric acid with a mass fraction of 68% for 1 h, then the anode material was added drop wise with an HF acid solution with a mass fraction of 20% to generate yellow smoke, and repeated adding until no more yellow smoke generated in the solution; finally added with a concentrated nitric acid with a mass fraction of 68% for digesting residue, and washed and dried, to obtain the anode material removed the silicon material.

### (2) Test of pore volume of the anode material or the anode material removed the silicon material

An ASAP2460 device of Micromeritics, American was adopted for testing, and pore volume V was calculated in a pore size range of 17Å to 3000Å depending on a BJH Desortation cumulative volume of pore model.

Micromeritics ASAP 2460 was adopted for micropore and mesopore analysis. At a temperature of liquid nitrogen, an object has an equilibrium adsorption amount of nitrogen on its surface related to pore size and other characteristics thereof. Based on a regularity of adsorption amount changing with relative pressure during the adsorption, the pore size is calculated by fitting multiple models. The report generated by the software calculated pore size distribution, total pore volume, and pore volume within a certain range by adopting a density functional theory (DFT) method.

### (3) Test of pore size of the anode material or the anode material removed the silicon material

A suitable amount of sample particles was taken, and measured with a Transmission Electron Microscope (TEM) for pore size of the pore thereof.

### (4) Raman test of the anode material

An XPLORA laser confocal Raman spectrometer of HORIBA, Japan was adopted for testing the Raman spectra, including Raman peak position, peak intensity (including height and area), full-width at half-maximum, etc. For example, a sample was placed on sample stage of the Raman spectrometer, and ensured to aligned with laser beam, with testing conditions: 532 nm laser, and a testing range of 100 cm⁻¹ to 3000 cm⁻¹. A standard substance was used for zero calibration, to ensure accuracy and precision of spectra. The sample was excited by laser, and frequency and intensity of a scattered light were measured. A method for testing peak height here, for example, at 520±10 cm⁻¹, was to access the data in this range, and from which found the vertical axis involving a maximum and the corresponding horizontal axis. For example, for a certain sample, if majority of the spectra showed, at a certain horizontal axis, the corresponding vertical axis with a maximum, an average value of the vertical axes corresponding to this horizontal axis in n spectra (n≥15) was taken as a basis for the peak value calculation. The peak area was tested according to a conventional area testing method, such as an integration method.

### (5) Test of gas generation

Carboxymethyl cellulose (CMC) was dispersed in water at a 1.4% mass ratio for preparing collosol. After fully dispersed, 10 g of the collosol was mixed with 10 g of the anode material to form a slurry. The slurry was placed in an aluminum-plastic bag, and recorded its mass. Then, the bag was sealed to form a sealed aluminum-plastic bag.

The sealed aluminum-plastic bag was fixed at bottom of a container and completely immersed in water, and recorded its volume. After a fixed time (24 h), the volume of the aluminum-plastic bag was recorded again. The gas production of the silicon anode material was calculated depending on a volume change of the aluminum-plastic bag, in an unit of mL/g.

### (6) Test method of mass content of carbon element in the anode material

A G4 ICARUS HF infrared carbon-sulfur analyzer of Bruker, Germany was adopted. A sample was burned in a high-temperature and oxygen-rich environment, and the carbon element and sulfur element contained thereof were oxidized to carbon dioxide and sulfur dioxide, respectively. The generated gases were carried into an infrared detector by a carrier gas, and the contents of carbon element and sulfur element were respectively calculated by quantitatively analyzing the changes of the carbon dioxide and sulfur dioxide signals.

### (7) Test method of mass content of silicon element in the anode material

A SA2-9-17TP box-type atmosphere furnace of Nanyang Xinyu was adopted. A sample was heated in an oxygen atmosphere to allow silicon and silicon monoxide therein to react to form silicon dioxide, and the carbon therein was burned to be carbon dioxide and discharged. The silicon content was calculated by weighing.

### (8) Test method of specific surface area of the anode material

A TriStar 3000 surface area and pore size analyzer of Micromeritics, American was adopted for measuring the specific surface area.

### (9) Test method of tap density of the anode material

A DAT-6-220 tap density tester of Quantachrome, American was adopted for testing the tapped density, with100 g of sample weighed, and vibrated at 300 times/min for 3000 vibrations.

### (10) Test method of particle size of the anode material

A laser diffraction particle size analyzer was adopted for testing D50 showing a symmetric distribution liked a normal distribution. In its volume weighted distribution, the cumulative diameter at 50% was D50, and similarly, the cumulative diameters at 90% and 10% were D90 and D10, respectively.

### (11) Test method of mass contents of nitrogen, oxygen and hydrogen elements in the anode material removed the silicon material

A ONH 2000 oxygen nitrogen hydrogen element analyzer of VERDER, Germany was adopted. A sample wrapped up by a flux was melted in an inert atmosphere, the oxygen element contained therein was reduced to carbon dioxide by carbon in the graphite crucible. The generated carbon dioxide was carried into an infrared detector by a carrier gas, and the oxygen content was calculated by quantitatively analyzing the changes of the carbon dioxide signal. A sample wrapped up by a flux was melted in an inert atmosphere, and the nitrogen element and hydrogen element contained therein were decomposed to their respective stable elementary substances (nitrogen gas and hydrogen gas). The generated nitrogen and hydrogen gases were carried into a thermal conductivity detector by a carrier gas, and the mass contents of nitrogen element and hydrogen element were respectively calculated by quantitatively analyzing the thermal changes of the thermal conductivity cell.

### (12) Test of compaction density of the anode material

A CARVER 4350.22 powder compaction density meter of MYCRO, American was adopted. A sample with a prescribed mass m was placed in a mold, and to which a 1.0T pressure was applied for 30 seconds, then released the pressure, measured for thickness, and calculated for the compaction density.

### (13) Test of pH of the anode material

A FE20 pH meter of METTLER TOLEDO was adopted. The pH value was obtained by depending on a potential difference measured in a solution by the working electrode cell, formed by combining a measurement electrode and a reference electrode, utilizing the linear relationship between a pH value of the solution to be measured and a potential of the working cell, and converting by an ammeter. 5 g of sample was mixed with 30/45 mL of water, stirred and dispersed, then ultrasonicated for 5 min, standed for 10 min, and tested.

### (14) Test of electrochemical performance

1) test method of initial discharging specific capacity and initial Coulombic efficiency (ICE): the anode material, conductive carbon black, and polyacrylic acid (PPA) in a mass ratio of 75:15:10 were blended to form an anode slurry, then coated on a copper foil, and dried, to prepare an anode plate. A button battery was assembled by further using a lithium metal sheet as a counter electrode in an argon-filled glove box. The test for charging and discharging of the button battery was performed at a current density of 0.1C and a charging and discharging range of 0.01V to 5V, to obtain the initial discharging specific capacity and the initial Coulombic efficiency (ICE) of the button battery.
2) test method of capacity retention rate and thickness expansion rate of the plate after 50 cycles: the active anode material, conductive carbon black (Super-P), conductive graphite (KS-6), carboxymethyl cellulose (CMC), and styrene-butadiene rubber (SBR) in a mass ratio of 92:2:2:2:2 were blended to form an anode slurry, then coated on a copper foil, and dried, to prepare an anode plate, where the anode active material was a mixture of the anode material of the present disclosure and graphite with a ratio determined by their initial reversible specific capacities and desired capacity composition to be set. A button battery was assembled by further using a lithium metal sheet as a counter electrode in an argon-filled glove box. The test for charging and discharging of the button battery was performed for 50 times at a current density of 1C and a charging and discharging range of 0.01V to 5V, to obtain the capacity retention rate and the thickness expansion rate of the plate after 50 cycles of the button battery.

**Table 1. Parameters of the anode material removed the silicon material**

| Sample | Mass content of hydrogen element (%) | Mass content of oxygen element (%) | Mass content of nitrogen element (%) | Volume proportion of pore with a pore size of 5 nm or less (%) | Q₀ cm³/g | B |
|---|---|---|---|---|---|---|
| Example 1 | 0.2 | 0.01 | 0.5 | 90 | 0.76 | 1.5 |
| Example 2 | 0.1 | 0.2 | 0.25 | 93 | 0.51 | 1.9 |
| Example 3 | 0.25 | 0.33 | 0.13 | 92 | 0.92 | 1.2 |
| Example 4 | 0.17 | 0.67 | 0.39 | 97 | 1.08 | 1.1 |
| Example 5 | 0.19 | 0.01 | 0.51 | 99 | 1.25 | 1.0 |
| Example 5' | 0.19 | 0.01 | 0.52 | 98 | 1.23 | 1.1 |
| Example 6 | 0.21 | 0.01 | 0.5 | 89 | 0.75 | 1.5 |
| Example 7 | 0.2 | 0.01 | 0.49 | 91 | 0.80 | 1.4 |
| Example 8 | 0.19 | 0.16 | 0.41 | 94 | 0.91 | 1.3 |
| Comparative Example 1 | 0.2 | 0.01 | 0.5 | 90 | 0.76 | 1.5 |
| Comparative Example 2 | 0.2 | 0.01 | 0.5 | 90 | 0.75 | 1.5 |
| Comparative Example 3 | 0.2 | 0.01 | 0.5 | 90 | 0.74 | 1.5 |
| Comparative Example 4 | 0.2 | 0.01 | 0.5 | 90 | 0.75 | 1.5 |

**Table 2. Parameters of the anode material**

| Sample | I_{A} /(I_{B} +I_{C} ) | I_{D}/I_{G} | A | Specific surface area m²/g | Total pore volume Q₁ cm³/g | Compaction density g/cm³ | Tap density g/cm³ | Q₀-Q₁ | C content wt% | Si content wt% | Gas production at 25°C for 24h (mL/g) | Gas production at 45°C for 24h (mL/g) |
|---|---|---|---|---|---|---|---|---|---|---|---|---|
| Example 1 | 0.45 | 2.0 | 2.0 | 8.4 | 0.02 | 0.9 | 1.0 | 0.74 | 55 | 43 | 0.4 | 1.8 |
| Example 2 | 0.36 | 2.8 | 2.2 | 5 | 0.05 | 1.0 | 1.1 | 0.46 | 51 | 48 | 0.46 | 1.92 |
| Example 2 | 0.40 | 2.3 | 1.7 | 1 | 0.1 | 1.3 | 1.2 | 0.82 | 54 | 45 | 0.36 | 1.0 |
| Example 4 | 0.54 | 2.6 | 2.3 | 2.5 | 0.0036 | 1.0 | 0.75 | 1.0764 | 47 | 52 | 0.38 | 1.6 |
| Example 5 | 0.46 | 2.0 | 1.3 | 8.5 | 0.0029 | 0.8 | 0.7 | 1.2471 | 40 | 58 | 0.49 | 1.99 |
| Example 5' | 0.47 | 2.0 | 1.4 | 8.6 | 0.0028 | 0.8 | 0.9 | 1.2345 | 41 | 57 | 0.48 | 1.98 |
| Example 6 | 0.31 | 2.0 | 2.0 | 9.8 | 0.04 | 0.9 | 1.0 | 0.71 | 47 | 51 | 0.45 | 1.80 |
| Example 7 | 0.59 | 2.1 | 1.9 | 5.6 | 0.018 | 0.9 | 1.0 | 0.782 | 58 | 40 | 0.35 | 0.97 |
| Example 8 | 0.45 | 2.2 | 1.9 | 6.2 | 0.03 | 1.0 | 1.0 | 0.884 | 5.1 | 48 | 0.42 | 1.63 |
| Comparative Example 1 | 0.70 | 2.6 | 2.3 | 5 | 0.0026 | 0.9 | 1.0 | 0.7574 | 37 | 62 | 1 | 2.2 |
| Comparative Example 2 | 0.75 | 2.0 | 1.8 | 8.6 | 0.019 | 0.8 | 0.9 | 0.7481 | 36 | 61 | 1.2 | 2.1 |
| Comparative Example 3 | 0.25 | 2.1 | 1.9 | 9 | 0.016 | 0.9 | 0.9 | 0.724 | 62 | 35 | 0.2 | 1 |
| Comparative Example 4 | 0.22 | 2.4 | 2.1 | 6.8 | 0.025 | 0.9 | 1.0 | 0.725 | 61 | 34 | 0.3 | 0.9 |

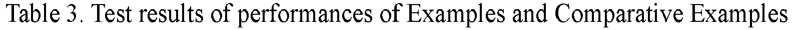

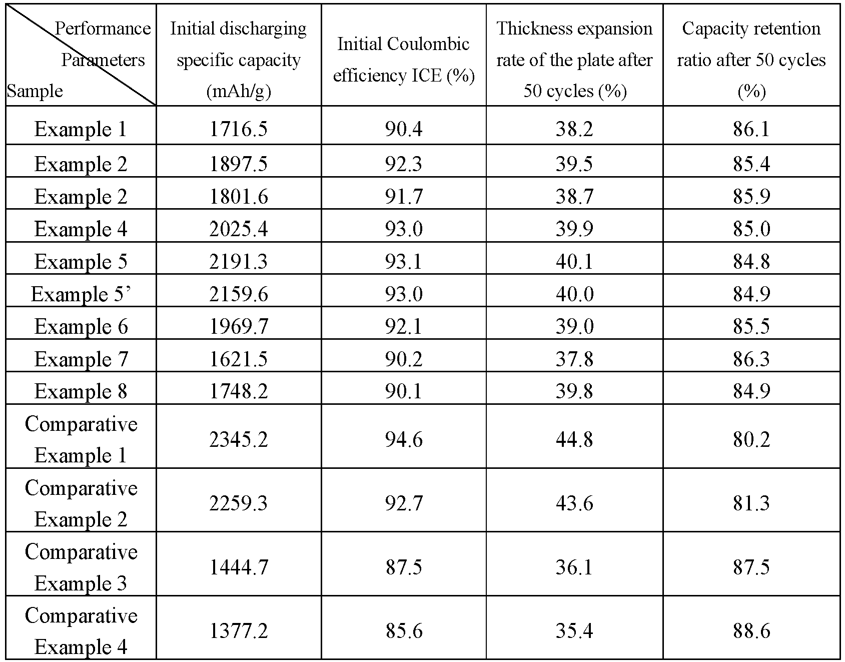

From the results shown in Tables 1 to 3, it can be seen that controlling the value of I_{A}/(I_{B}+I_{C}) allows that oxidation degree of surface of silicon particle in the anode material is controlled within a reasonable range. A proper amount of oxide on surface of the silicon particle reduces a side reaction caused by direct contact between silicon and an electrolyte, and also reduces influence on specific capacity and initial Coulombic efficiency of the battery prepared by the anode material due to excessive oxide. A proper amount of oxide on surface of the silicon material plays a role of passivation, which, during subsequent slurry preparation for plate by the anode material, reduces a side reaction between exposed Si and aqueous solution, and reduces problem of gas generation of the anode material. The anode material provided by the present disclosure has excellent electrochemical performance, improves cycle stability of the anode material, and reduce gas generation of the anode material.

Compared with Example 1, in the preparation processes of Examples 4 and 5, the reduced ratio of the carbonized material and the activator, i.e., increased addition amount of the activator, allows the prepared carbon matrix to have more sufficient pores and increased total pore volume. The carbon matrix has more space for filling the silicon material, thereby increasing specific capacity of the anode material, as well as initial Coulombic efficiency.

Compared with Example 1, in the preparation processes of Example 7, the reduced flow of silane and deposition duration result in the reduced amount of silicon material deposited in the carbon matrix. The reduced pore volume difference between the anode material removed the silicon material and the anode material containing the silicon material shows that the pore in the carbon matrix is not fully filled. Although the cycle performance of the anode material is improved, the specific capacity of the battery prepared by the anode material is reduced compared with that of Example 1.

Compared with Example 1, in the preparation processes of Comparative Example 1, the increased vapor deposition duration of the silicon material allows the increased mass content of the silicon material in the anode material, thereby further improving the specific capacity of the battery prepared by the anode material. The silicon material on surface of the anode material is increased, and the strength of I_{A} is increased, resulting in too large of I_{A} /(I_{B}+I_{C}), and insufficient oxidation degree of the silicon material on surface of the anode material. In the subsequent slurry preparation for plate by the anode material, the gas generation is increased significantly due to a side reaction between the exposed Si in the anode material and the aqueous solution. The expansion rate of the plate prepared by the anode material is obviously increased, and the cycle performance of the battery prepared by the anode material is reduced.

Compared with Example 1, in the preparation processes of Comparative Example 2, the increased flow of silane and vapor deposition duration allow the increased mass content of the silicon material in the anode material, thereby further improving the specific capacity of the battery prepared by the anode material. The silicon material on surface of the anode material is increased, and the strength of I_{A} is increased, resulting in too large of I_{A} /(I_{B}+I_{C}), and insufficient oxidation degree of the silicon material on surface of the anode material. In the subsequent slurry preparation for plate by the anode material, the gas generation is increased significantly due to a side reaction between the exposed Si in the anode material and the aqueous solution. The expansion rate of the plate prepared by the anode material is obviously increased, and the cycle performance of the battery prepared by the anode material is reduced.

Compared with Example 1, in the preparation processes of Comparative Example 3, the insufficient vapor deposition duration of the silicon material results in the decreased mass content of the silicon material in the anode material, thereby further reducing the specific capacity of the battery prepared by the anode material. The silicon material in the anode material is decreased, there is no obvious Si-Si bond, and the strength of I_{A} is decreased, resulting in too small of I_{A} /(I_{B}+I_{C}). Due to the decreased amount of silicon material in the anode material, the specific capacity and initial Coulombic efficiency of the battery prepared by the anode material decrease.

Similarly, compared with Example 1, in the preparation processes of Comparative Example 4, the relatively small flow of silane results in the decreased mass content of the silicon material in the anode material, thereby further reducing the specific capacity of the battery prepared by the anode material. The silicon material in the anode material is decreased, there is no obvious Si-Si bond, and the strength of I_{A} is decreased, resulting in too small of I_{A} /(I_{B}+I_{C}). Due to the decreased amount of silicon material in the anode material, the specific capacity and initial Coulombic efficiency of the battery prepared by the anode material decrease.

The above are merely some embodiments of the present disclosure, which, as mentioned above, are not intended to limit the present disclosure. Within the protection scope of the present disclosure, any modification, equivalent substitution, improvement shall fall into the protection scope of the present disclosure.

## Claims

1. An anode material, **characterized in that** the anode material comprises a carbon matrix and a silicon material; or a non-carbon matrix and a silicon material,
wherein the anode material, tested by Raman spectroscopy, has a first characteristic peak at 520±10 cm⁻¹ with a peak intensity of I_{A}; a second characteristic peak at 960±10 cm⁻¹ with a peak intensity of I_{B}; and a third characteristic peak at 480±10 cm⁻¹ with a peak intensity of I_{C}, wherein I_{A}, I_{B} and Ic have a relationship of 0.3≤I_{A}/(I_{B}+I_{C})≤0.6.

2. The anode material according to claim 1, **characterized in that** the anode material, tested by Raman spectroscopy, has a characteristic peak D at 1350±10 cm⁻¹ with a peak intensity of I_{D}; and a characteristic peak G at 1580±10 cm⁻¹ with a peak intensity of I_{G}, wherein 1≤I_{D}/I_{G}≤3.5.

3. The anode material according to claim 1, **characterized in that** the anode material and an anode material removed the silicon material are tested by an N₂ adsorption-desorption method, the anode material has a ratio A of a nitrogen volume adsorbed under 90% partial pressure and a nitrogen volume adsorbed under 10% partial pressure, wherein 1.3≤A≤2.5; and
the anode material removed the silicon material has a ratio B of a nitrogen volume adsorbed under 90% partial pressure and a nitrogen volume adsorbed under 10% partial pressure, wherein 1≤B≤1.9, and A/B>1.

4. The anode material according to claim 1, **characterized in that** the anode material satisfies at least one of the following technical features:
(1) an anode material removed the silicon material has a total pore volume of Q₀ cm³/g, and the anode material has a total pore volume of Q₁ cm³/g, wherein 0.1≤Q₀-Q₁≤2.0;
(2) an anode material removed the silicon material has a total pore volume of Q₀ cm³/g, wherein 0.2≤Q₀≤2.0; and
(3) the anode material has a total pore volume of Q₁ cm³/g, wherein 0.001≤Q₁≤0.1.

5. The anode material according to any one of claims 1 to 4, **characterized in that** an anode material removed the silicon material satisfies at least one of following features:
(1) the anode material removed the silicon material has a mass content of hydrogen element accounting for 0.01 wt% to 5 wt%;
(2) the anode material removed the silicon material has a mass content of oxygen element accounting for 0.01 wt% to 10 wt%; and
(3) the anode material removed the silicon material has a mass content of nitrogen element accounting for 0.01 wt% to 0.5 wt%.

6. The anode material according to any one of claims 1 to 5, **characterized in that** an anode material removed the silicon material has a pore, and pores with a pore size of 5 nm or less account for a volume proportion of ≥90% of all the pores.

7. The anode material according to any one of claims 1 to 6, **characterized in that** the anode material further comprises an active particle, wherein the active particle comprises at least one of Li, Na, K, Sn, Ge, Fe, Mg, Ti, Zn, Al, P, and Cu.

8. The anode material according to claim 1, **characterized in that** the silicon material satisfies at least one of the following technical features:
(1) the silicon material comprises at least one of amorphous silicon, crystalline silicon, silicon oxide, silicon alloy, and a composite of crystalline silicon and amorphous silicon;
(2) the silicon material comprises amorphous silicon; and
(3) the silicon material has an average particle size of 1 nm to 100 nm.

9. The anode material according to claim 1, **characterized in that** the anode material satisfies at least one of the following technical features:
(1) the anode material has a mass proportion of oxygen element accounting for ≤5 wt%;
(2) the anode material has a mass proportion of carbon element accounting for 40 wt% to 60 wt%; and
(3) the anode material has a mass proportion of silicon element accounting for 40 wt% to 60 wt%.

10. The anode material according to claim 1, **characterized in that** the anode material satisfies at least one of the following technical features:
(1) the anode material has a pore, and the pore comprises a micropore, wherein the micropore has a pore volume proportion accounting for 2% to 50%; and
(2) the anode material has a pore, and the pore comprises a mesopore, wherein the mesopore has a pore volume proportion accounting for 50% to 98%.

11. The anode material according to claim 1, **characterized in that** the anode material has a specific surface area of 0.5 m²/g to 10 m²/g.

12. The anode material according to claim 1, **characterized in that** the anode material has a compaction density of 0.8 g/cm³ to 1.3 g/cm³.

13. The anode material according to claim 1, **characterized in that** the anode material has a tap density of 0.5 g/cm³ to 1.5 g/cm³.

14. The anode material according to claim 1, **characterized in that** an anode slurry prepared by the anode material has a gas production of ≤0.5 mL/g after 24 h at 25°C. The anode slurry prepared by the anode material has a gas production of ≤2 mL/g after 24 h at 45°C.

15. A battery, **characterized in that** the battery comprises the anode material according to any one of claims 1 to 14.
